# EUROPEAN PATENT SPECIFICATION

(11) **EP 2 476 565 B1**
(45) Date of publication and mention of the grant of the patent: **24.07.2013**
(21) Application number: 12151567.0
(22) Date of filing: 18.01.2012
(51) Int. Cl.: B60G 7/00, B62D 35/02

(54) **Air deflecting cover for vehicle**
Luftumleitung an Fahrzeugen
Déflecteur d'air pour véhicules

(30) Priority: 18.01.2011 JP 2011007913
(43) Date of publication of application: 18.07.2012
(73) Proprietor: Honda Motor Co., Ltd., Tokyo 107-8556 (JP)
(72) Inventor: Hasegawa, Akira, Saitama, 351-0193 (JP); Tanaka, Kazuo, Saitama, 351-0193 (JP)
(74) Representative: Herzog, Markus

(56) References cited:
- EP-A1- 0 030 122
- DE-A1- 3 110 991
- DE-A1-102010 018 779
- JP-A- 2005 053 321
- US-A1- 2007 096 420

## Description

The present invention relates to an air deflecting cover for straightening out the air flowing underneath the vehicle.

From document EP-A- 0 030 122, a vehicle is known, which comprises means forming an undersurface which are mounted such that they move relative to the body of the vehicle together with the wheels. The means forming the undersurface further comprise downwardly and longitudinally extending skirts at its sides, thus forming a duct together with a support surface.

Vehicular air deflecting covers include a suspension cover that covers a rear suspension from below. The suspension cover is composed of a trailing arm cover, an axle cover, and a watts link cover. These covers are coplanar with one another so that the aerodynamic performance of an undersurface of the vehicle body can be improved. A particular example of such suspension cover is disclosed in Japanese Patent Application Laid-open Publication (JP-A) No. 2005-53321.

The disclosed suspension cover, however, cannot guide crosswinds that may occur around the suspension. Accordingly, when subjected to a stream of air flowing laterally or crosswise through the underbody, this suspension cover allows the air to hit directly on the suspension to cause a turbulent flow, resulting in deterioration of the aerodynamic performance.

It is therefore an object of the present invention to provide a vehicular air deflecting cover, which is mountable on a suspension device of the vehicle for straightening out the air flowing underneath the vehicle, and which is capable of deflecting crosswinds in a direction substantially parallel to a longitudinal centerline of the vehicle to thereby improve the steering stability of the vehicle.

According to the present invention, there is provided an air deflecting cover mountable on a suspension device of a vehicle for straightening out air flowing underneath the vehicle, characterized in that the air deflector cover includes an inside cover section mountable on a suspension member of the suspension device extending in a width direction of the vehicle, the inside cover section having a vertical flow straightening surface extending in a longitudinal direction of the vehicle and facing toward a widthwise central portion of the vehicle.

With this arrangement, when the vehicle is travel forward, the air flows underneath the vehicle. In this instance, because the air deflecting cover includes an inside cover section mountable on the suspension member of the suspension device extending in the width direction of the vehicle, and because the inside cover section has a vertical flow straightening surface extending in a longitudinal direction of the vehicle and facing toward a widthwise central portion of the vehicle, a stream of air flowing in a crosswise direction of the vehicle, i.e., a crosswind is deflected or straightened out by the vertical flow straightening surface of the inside cover section at a position downstream of the suspension member.

By thus preventing the passage of air through an area including a suspension spring of the suspension device in a direction from the widthwise central portion of the vehicle to a lateral outward direction of the vehicle, the vehicle steering stability can be improved even when the vehicle is subjected to natural crosswinds during forward traveling.

the air deflecting cover further includes a bottom cover section mountable on a bottom part of the suspension member and having a flow straightening surface facing downward of the vehicle, wherein the inside cover section and the bottom cover section are formed integrally with each other. By thus integrating the inside and bottom cover sections into a one-piece unitary structure, the air deflecting cover has a strength large enough to withstand a severe traveling wind.

the bottom cover section is a bottom plate member lying below an end of the suspension member, and the inside cover section is an inside plate member extending upright from an inside edge of the bottom plate member directed toward the widthwise central portion of the vehicle. By virtue of the inside plate member (inside cover section) formed continuously with the inside edge of the bottom plate member, the air deflecting cover is able to perform air straightening operation with improved efficiencies by using a lower part thereof where a relatively high airflow velocity can be achieved.

Preferably, the bottom plate member has a drain hole formed therein and located adjacent to the inside edge of the bottom plate member. With this arrangement, when the bottom plate member (bottom cover section) is splashed with water, the water starts gathering at a corner formed between the bottom and inside cover sections. Since the drain hole is formed adjacent to the inside edge of the bottom plate member with which inside plate member is formed integrally, the water can readily be removed discharged from the drain hole. Thus, the drainage performance of the air deflecting cover is very high.

Preferably, the bottom cover section has an end disposed below a suspension shock absorbing member disposed vertically behind the suspension member and the drain hole is located forwardly of and adjacent to the suspension shock absorbing member. With this arrangement, when the vehicle is traveling forward, a part of the air (traveling wind) passes through the drawing hole from below to above, then hits on the suspension shock absorbing member, and thereafter continues to stay at a region disposed substantially above the drain hole. Due to the presence of an airflow staying at the region substantially above the drain hole, further entry of the traveling air from the drain hole is hardly possible to occur, and the high drainage performance can be maintained.

Preferably, the bottom plate member has a rib extending upright from an inner surface thereof and located rearward of the drain hole. With this arrangement, when the vehicle is traveling forward, a part of the traveling wind passes through the drain hole from below to above, then hits on the rib, and thereafter continues to stay at a region substantially above the drain hole. Due to the presence of an airflow continuously staying at the region substantially above the drain hole, further entry of the traveling wind from the drain hole is hardly possible to occur and the high drainage performance can be maintained.

Preferably, the bottom cover section is lockingly engaged with a part of a shock absorber attachment portion, which is contiguous with the end of the suspension member and extends in a rearward direction of the vehicle. The shock absorber attachment portion is made rigid and hence can reliably retain the bottom cover section even when the bottom cover section is subjected to a heavy load, which may occur when the bottom cover section is stacked with accumulated snow.
Fig. 1 is a perspective view of a rear part of a vehicle as viewed from below, including an air deflecting cover according to an embodiment of the present invention;
Fig. 2 is an enlarged view of a par of Fig. 1, showing the air deflecting cover in detail;
Fig. 3 is a view taken in the direction of the arrow 3 in Fig. 2;
Fig. 4 is a view taken in the direction of the arrow 4 in Fig. 2;
Fig. 5 is a side view of the air deflecting cover;
Fig. 6 is a view taken in the direction of the arrow 6 in Fig. 5;
Fig. 7 is a view taken in the direction of the arrow 7 in Fig. 5;
Fig. 8 is a view taken in the direction of the arrow 8 in Fig. 5;
Fig. 9 is a view taken in the direction of the arrow 9 in Fig. 8; and
Fig. 10 is a view taken in the direction of the arrow 10 in Fig. 8.

A preferred structural embodiment of the present invention will be described below in detail with reference to the accompanying sheets of drawings.

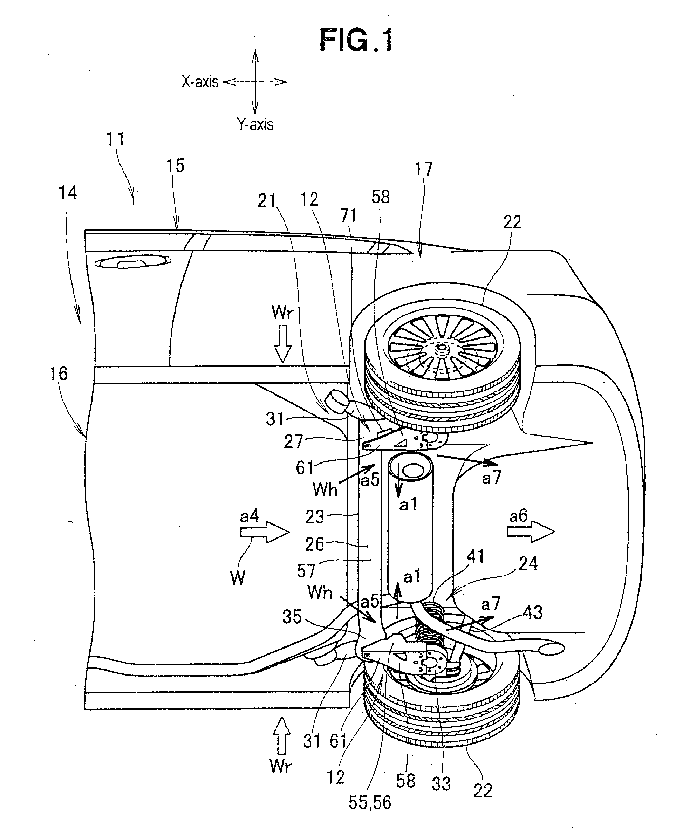

As shown in Fig. 1, an air deflecting cover 12 embodying the present invention is used in a vehicle 11. The vehicle 11 includes a vehicle body 15 having a passenger compartment 14. The vehicle body 15 further includes an underbody 16 forming a floor of the passenger compartment 14, a side body 17, a rear suspension device 21 supported by the underbody 16 and the side body 17, and rear wheels 22, 22 supported by the rear suspension device 21.

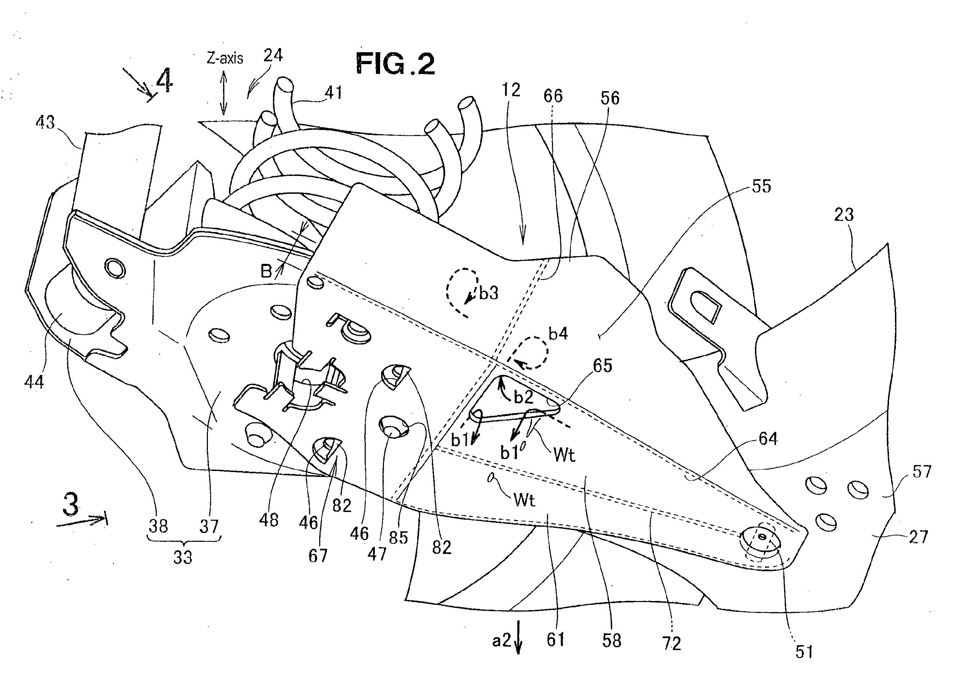

In the illustrated embodiment, a front-rear or longitudinal direction of the vehicle 11 is referred to as an X-axis direction, a width or transverse direction of the vehicle 11 is referred to as a Y-axis direction, and a height or vertical direction of the vehicle 11 is referred to as a Z-axis direction (Fig. 2).

As shown in Figs. 1 to 4, the rear suspension device 21 is a torsion beam suspension and includes a suspension member 23 extending in the Y-axis direction of the vehicle 11, and a suspension shock absorbing member 24 provided between the suspension member 23 and the vehicle body 15.

The suspension member 23 includes a beam body 26 extending in the Y-axis direction of the vehicle 11, a vehicle body connection arm 31 contiguous with one end (left end) 27 of the beam body 26, a wheel support arm 32, and a shock absorber attachment portion 33.

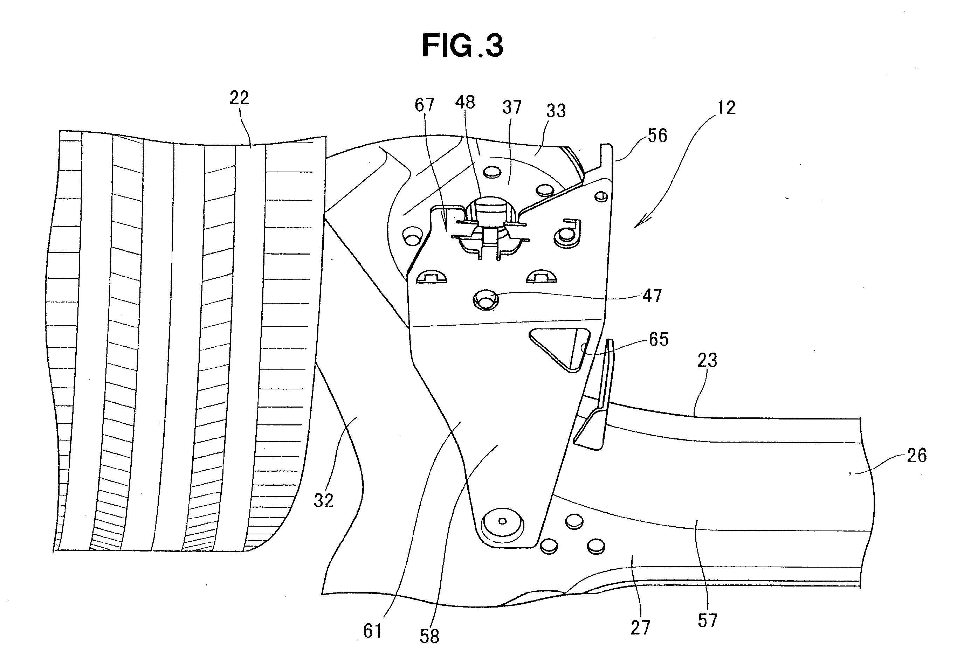

The vehicle body connection arm 31 extends in a forward direction of the vehicle 11, and both of the wheel support arm 32 (Fig. 3) and the sock absorber attachment portion 33 extend in a backward direction of the vehicle 11. The suspension member 23 is substantially bilaterally symmetric in configuration with respect to a central part thereof. Designated by reference numeral 35 is the other end (right end) of the beam body 26. The one end (left end) 27 and the other end (right end) 35 of the beam body 26 also form one end and the other end of the suspension member 23.

The shock absorber attachment portion 33 includes a suspension spring attachment part 37, and a shock absorber attachment part 38 contiguous with the suspension spring attachment part 37. A suspension spring (coil spring) 41 has a lower end 42 attached to the suspension spring attachment part 37, and a sock absorber 43 has a lower connection end 44 attached to the shock absorber attachment part 38.

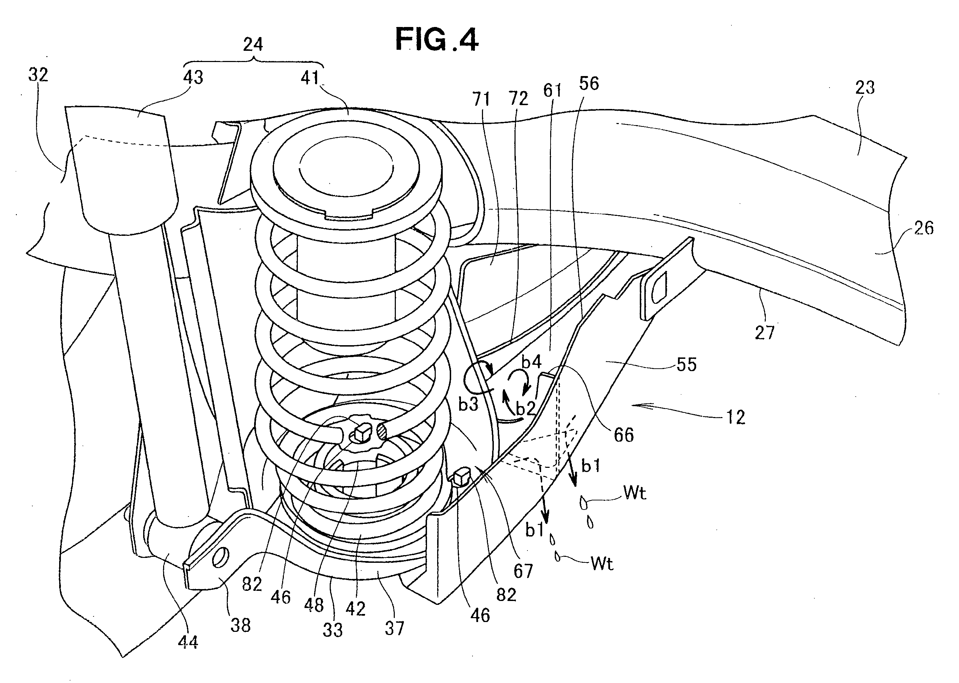

The suspension spring attachment part 37 has rear locking holes 46 (Figs. 2 and 4), a positioning boss 47, and a central opening 48. A front locking hole 51 (Fig. 2) is formed in each of the one end (left end) 27 and the other end (right end) 35 of the suspension member 23. The rear locking holes 46, positioning boss 47, central opening 48, and the front locking hole 51 are used when the air deflecting cover 12 is mounted to the rear suspension device 21.

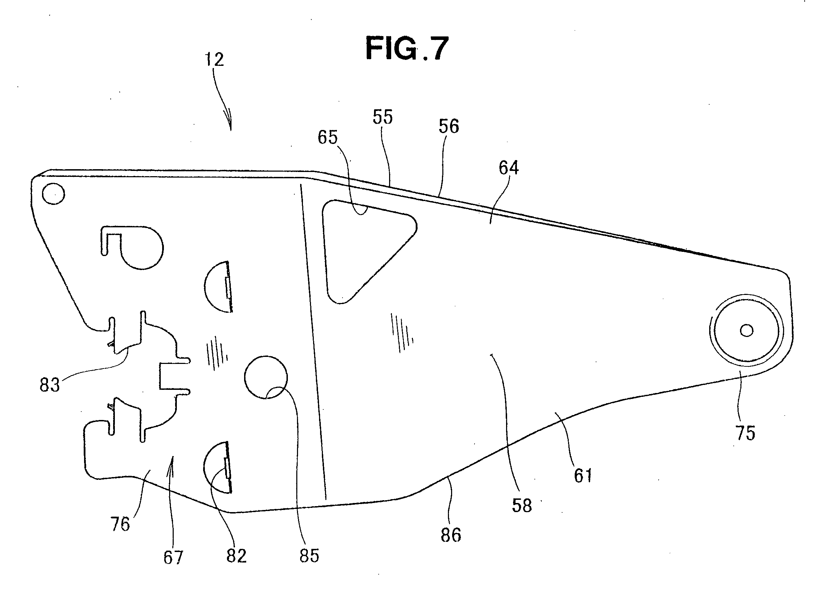

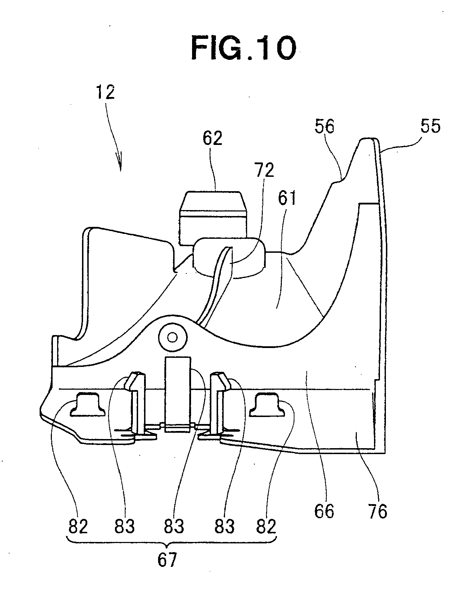

The air deflecting cover 12 of the vehicle 11 will be described below with reference with Figs. 1 to 10. The air deflecting cover 12 is mounted on the suspension device (rear suspension device) 21 for straightening out the air flowing underneath the vehicle 11. The term "air flowing underneath the vehicle 11" is used to refer to a stream of air flowing underneath the vehicle 11 while the vehicle 11 is traveling forward.

The air deflecting cover 12 is provided on the suspension member (beam) 23 of the rear suspension device 21 extending in the width (Y-axis) direction of the vehicle 11. The air deflecting cover 12 includes an inside cover section 56 having a vertical deflecting surface (flow straightening surface) 55 extending in the longitudinal (X-axis) direction and facing (in the direction of the arrow a1) toward a widthwise central portion of the vehicle 11.

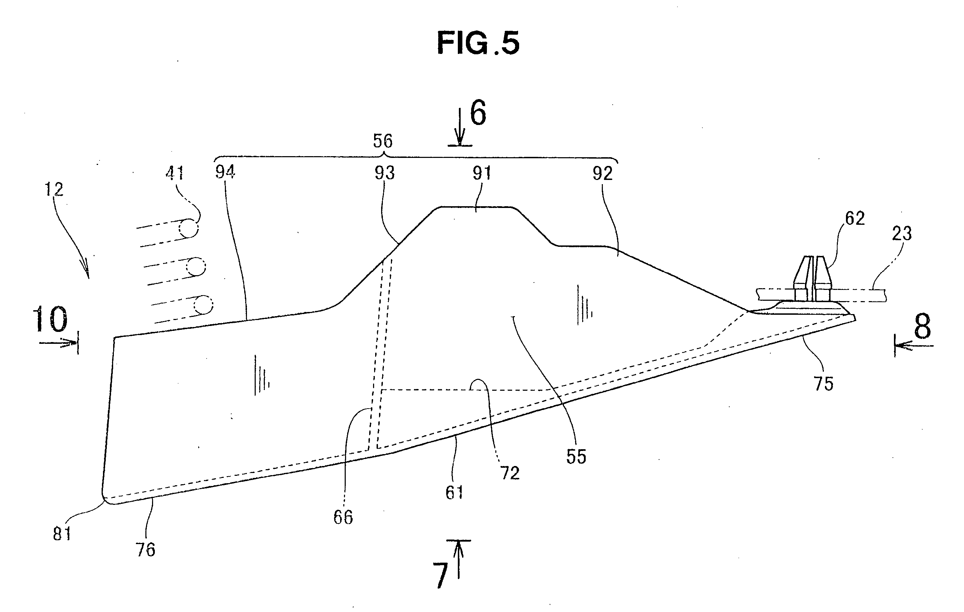

The air deflecting cover 12 also includes a bottom cover section 61 disposed below a bottom part 57 of the suspension member 23 and having a deflecting surface (flow straightening surface) 58 facing downward of the vehicle 11 (in the direction of the arrow a2 shown in Fig. 2). The bottom cover section 61 and the inside cover section 56 are formed integrally with each other. Reference numeral 62 shown in Fig. 5 denotes a front locking part or clip provided on the air deflecting cover 12.

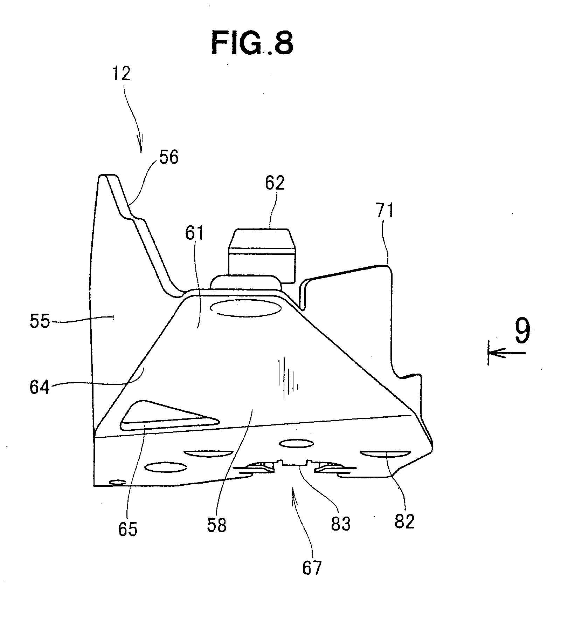

The bottom cover section 61 is a bottom plate member lying below one end (the left end 27 or the right end 35) of the suspension member 23. The inside cover section 56 is an inside plate member extending upright from an inner surface (upper surface) of the bottom plate member 61 and extending along an inner edge 64 (Fig. 8) of the bottom plate member (bottom cover section) 61. The inner edge 64 is directed toward the widthwise central portion of the vehicle 11. The bottom plate member 61 also has a front edge 78, a rear edge 81, and an outer edge 86. The bottom plate member (bottom cover section) 61 has a drain hole 65 formed therein and located adjacent to the inner edge 64 thereof.

The bottom cover section 61 has an end disposed below the suspension shock absorbing member 24 disposed vertically behind the suspension member 23. The drain hole 65 is disposed forwardly of, and adjacent to, the suspension shock absorbing member 24 of the vehicle 11. As described above, the suspension shock absorbing member 24 is comprised of the suspension spring (coil spring) 41 and the shock absorber 43.

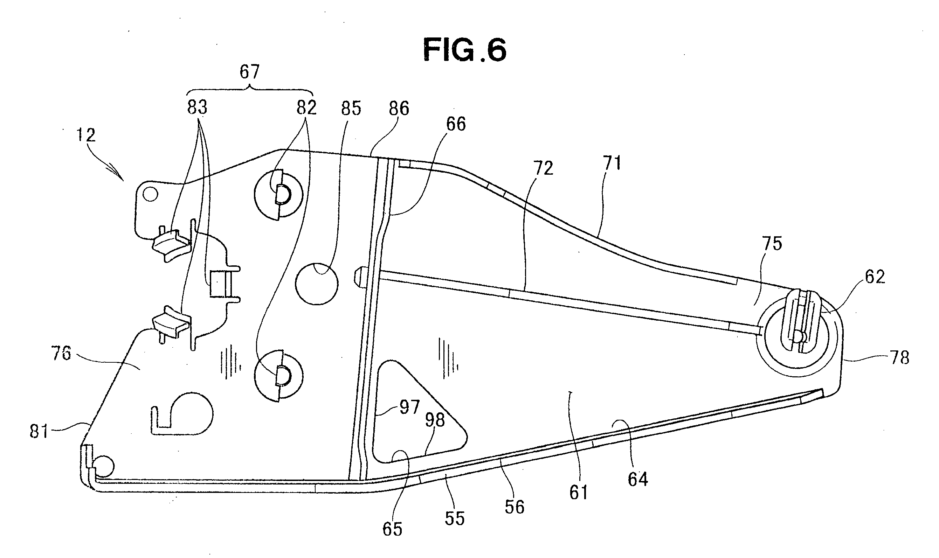

The bottom cover section (bottom plate member) 61 has a transverse rib 66 extending upright from the inner surface thereof and disposed rearwardly of the drain hole 65. The bottom cover member 61 is attached to the suspension spring attachment part 37, which is contiguous to and extending rearward from the end 27, 35 of the suspension member 23. Reference numeral 67 shown in Fig. 6 denotes a rear locking part of the air deflecting cover 12.

The suspension spring attachment part 37 has a plurality of rear locking holes 46, and a central opening 48 that are formed to extend through the thickness of the suspension spring attachment part 37. The central opening 48 has a circular shape and has a center aligned with a central axis of the suspension spring (coil spring) 41. Thus, the circular central opening 48 is formed coaxially with the coil spring 41. The rear locking holes 46 are located on a radial outer side of suspension spring (coil spring) 41 and formed forwardly of the central axis of the coil spring 41.

The air deflecting cover 12 will be described in further details. Two of such air deflecting covers 12, 12 are disposed symmetrically with respect to a center of the rear suspension device 21, and only the left air deflecting cover 12 will be described.

The air deflecting cover 12 is formed from a synthetic resin material. Additional to the bottom cover section (bottom plate member) 61, front locking part 62, rear locking part 67, inside cover section (inside plate member) 56 and transverse rib 66 that are previously discussed above, the air deflecting cover 12 also has an outside cover section (outside plate member) 71 and a longitudinal rib 72.

As shown in Fig. 5, the bottom cover section (bottom plate member) 61 is inclined to face toward the forward direction of the vehicle so that the bottom cover section 61 has a ground height or clearance which is greater at a front end portion 75 attached to the bottom part 57 of the suspension member 23 than at a rear end portion 76 attached to the suspension spring attachment part 37. The ground height of the bottom cover section 61 is determined depending on ground heights of the suspension member 23 and the suspension spring attachment part 37.

As shown in Fig. 6, the bottom cover section 61 has a generally wedge-shaped configuration tapering toward the front end portion 75. The bottom cover section 61 has a narrow front edge 78 facing in a forward direction of the vehicle 11 and a wide rear edge 81 facing in a rearward direction of the vehicle 11. The front end portion 75 of the bottom cover section 61 including the narrow front edge 78 is provided with the front locking part 62, and the rear end portion 76 of the bottom cover section 61 including the wide rear edge 81 is provided with the rear locking part 67. The front locking part 62 is in the form of a clip.

The rear locking part includes first locking prongs 82 and second locking prongs 83. The first locking prongs 82 are in interlocking engagement with the rear locking holes 46 of the suspension spring attachment part 37 and the second locking prongs 83 are in interlocking engagement with the central opening 48 of the suspension spring attachment part 37. The number of the second locking prongs 83 is three, and three second locking prongs 83 are arranged concentrically with the central opening 48 and disposed equidistantly from each other about the center of the central opening 48.

The bottom cover section 61 has a positioning hole 85 formed in the rear end portion 76 thereof for fitting engagement with the positioning boss 47 of the suspension spring attachment part 37. Thus, the bottom cover section 61 can be reliably fixed in position against movement in the longitudinal (X-axis) and width (Y-axis) directions of the vehicle 11.

The inside edge 64 and the outside edge 86 of the bottom cover section 61 extend between the front edge 78 and the rear edge 81. The inside and outside edges 64, 86 have rear end portions that are located rearward of the transverse rib 66 and extending substantially parallel with each other. The outside cover section 71 extends upright from the inner surface of the bottom cover section 61 and extends along that part of the outside edge 86 which is located forwardly of the transverse rib 66.

The inside cover section 56 has a generally dogleg shape in plan view (see Fig. 6), extending along the inside edge 64 of the bottom cover section 61. As shown in Fig. 5, the inside cover section 56 extends between the suspension member 23 and the suspension spring 41 so as to cover these parts or components disposed between the suspension member 23 and the suspension spring 41.

As viewed in side elevation of the vehicle 11 (see Fig. 5), the inside cover section 56 has a longitudinal central portion provided with a crest 91, a sloped front portion 92 having a varying height increasing gradually in a direction from a front end portion located near the clip 62 toward the central crest 91, and a sloped intermediate portion 93 contiguous with a rear end of the central crest 91 and having a varying height reducing gradually in a direction from the central crest 91 toward a rear end portion 97, and the rear end portion 97 extending rearward from a rear end of the sloped intermediate portion 93 to the rear edge 81 of the bottom cover section 61, the rear end portion 97 being substantially half the height of the central crest 91.

By thus providing at least the rear end portion 94 of a reduced height, it is possible to reduce the weight of the inside cover section 56 to the extent that the inside cover section 56 is still able to perform a desired flow straightening operation.

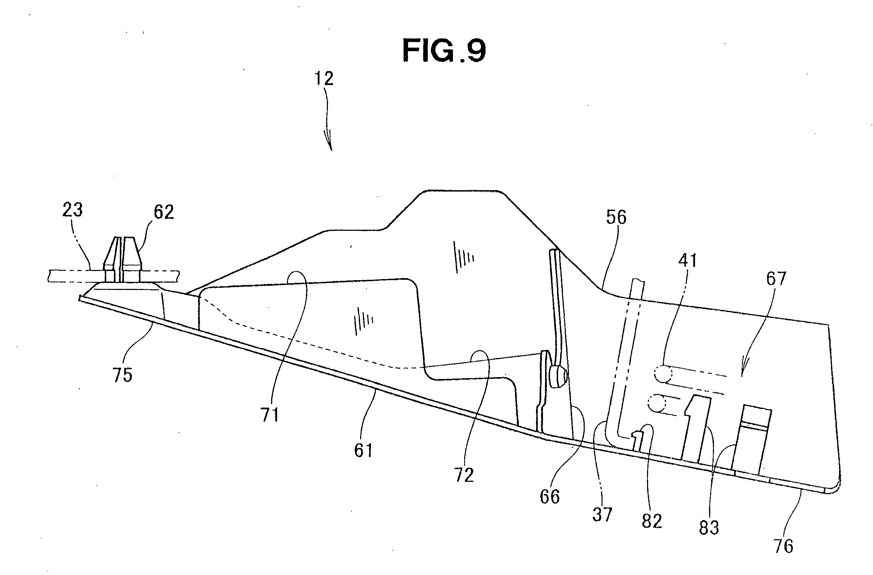

As shown in Figs. 4 and 9, the outside cover section 71 extends from a front end located near the clip 62 toward the transverse rib 66 and terminates immediately short of the transverse rib 66. The longitudinal rib 72 is disposed intermediately between the inside cover section 56 and the outside cover section 71 and formed integrally with the inside surface of the bottom cover section 61. The longitudinal rib 72 has a rear end located adjacent to the suspension spring 41 and formed integrally with the transverse rib 66.

The transverse rib 66 is formed separately from the outside cover section 71 and is formed integrally with the inside cover section 56. An end of the transverse rib 66, which is joined integrally with the inside cover section 56, has the same height as that part of the inside cover section 56 located at a joint with the transverse rib 66. The transverse rib 66 has a varying height reducing gradually in a direction from the inside cover section 56 toward the outside cover section 71. The thus formed transverse rib 66 serves to reinforce the inside cover section 56. Furthermore, by virtue of a large height, the transverse rib 66 is also able to hold or retain a stream of air at a region substantially above the drain hole 65 after the air has passed through the drain hole 65 from below to above. By the stream of air staying at the region substantially above the drain hole 65, further entry of the air from the drain hole 65 is hard to take place.

The drain hole 65 is located at a corner formed between the transverse rib 66 and the inside cover section 56 and has a triangular shape. The triangular drain hole 65 has a first peripheral edge 97 extending along the transverse rib 66 and a second peripheral edge 98 extending along the inside cover section 56. By thus providing triangular drain hole 65, water that may gather at the corner between the transverse rib 66 and the inside cover section 56 can be removed smoothly and reliably. The triangular drain hole 65 is relatively small in cross-sectional area and hence does not cause substantive reduction in strength of the air deflecting cover 12.

Description will next be made about operation of the vehicular air deflecting cover 12.

As shown in Fig. 1, while the vehicle 11 is traveling forward, a stream of air (traveling wind) W flowing underneath the vehicle 11 as indicated by the arrow a4 may occasionally involve that part of the air forming a crosswind Wh tending to flow in a direction from a widthwise central portion of the vehicle through the suspension spring 41 to a lateral outer side (right side or left side) of the vehicle 11, as indicated by the arrow a5. In this instance, the air deflecting cover 12 deflects the crosswind Wh to flow backward along the inside cover section 56, as indicated by the arrow a7. By thus deflecting the crosswind Wh in the direction of the arrow a7 that is substantially parallel to a longitudinal centerline of the vehicle 11, it is possible to prevent the occurrence of a turbulent flow which may otherwise be created when the crosswind Wh impinges directly on the suspension spring 41. The deflected crosswind Wh merges into a stream of air a6 flowing underneath the vehicle 11 along the longitudinal centerline of the vehicle 11. By thus deflecting or straightening out the crosswind Wh, a side force of air tending to displace the vehicle in a width direction is considerably reduced and high steering performance of the vehicle can be maintained.

Furthermore, a crosswind Wr flowing in a direction from a lateral outer side (right or left side) of the vehicle 11 toward the suspension spring 41 is also guided by the air deflecting cover 12 so that the crosswind Wr flows backward along the inside cover section 56 in the direction indicated by the arrow a6. By thus guiding the crosswind Wr, it is possible to prevent the occurrence of a turbulent flow which may otherwise created due to direct impingement of the crosswind Wr on the suspension spring 41, and the high vehicle steering stability can be maintained.

Additionally, since part of air flowing past the left end 27 or the right end 35 of the suspension member 23 is immediately guided by the bottom cover section 61 of the air deflecting cover 12, it is possible to prevent a turbulent flow from occurring at the left end 27 or the right end 35 of the suspension member 23. This will improve the air straightening effect attainable at the bottom of the suspension member 23.

Furthermore, by virtue of the inside cover section (inside plate member) 56 formed continuously with the inside edge 64 of the bottom cover section 61, the air deflecting cover 12 is able to perform air straightening operation with improved efficiencies by using a lower part B (Fig. 2) thereof where a relatively high airflow velocity can be achieved. In this connection, the velocity of air flowing underneath the vehicle 11 has a maximum value at a level, which is half the ground height or clearance of the flow deflecting cover 12. The flow velocity of the air becomes low at the bottom of the vehicle or at a level nearly equal to the level of the bottom cover section (bottom plate member) 61. Furthermore, the flow velocity of the air measured at the central crest 91 of the inside cover section 56 is lower than a flow velocity of the air measured at the bottom cover section 61 of the air deflecting cover 12.

As shown in Figs. 2 and 4, when the bottom cover section 61 of the air deflecting cover 12 is splashed with water Wt such as rainwater, the water immediately starts gathering at a corner defined by and between the bottom cover section 61, the transverse rib 66 and the inside cover section 56. In this instance, because this corner is provided with the drain hole 65, the water Wt gathering at the same corner will be readily discharged from the drain hole 65 as indicated by the arrow b1. A high drainage performance can thus be achieved.

Furthermore, as also shown in Figs. 2 and 4, a part of the air (traveling wind), having entered the air deflecting cover 12 from the drain hole 65 as indicated by the arrow a2, impinges on the suspension shock absorbing member 24 (more properly, the suspension spring 41) and then continues to stay at a region substantially above the drain hole 65, as indicated by the arrow a3. Another part of the air (traveling wind), having entered the deflecting cover 12 from the drain hole 65, also impinges on the transverse rib 66 and continues to stay at a region substantially above the drain hole 65, as indicated by the arrow a4. Due to the presence of a stream of air continuously staying at the regions substantially above the drain hole 65, further entry of the air (traveling wind) from the drain hole 65 is hardly possible to occur and the high drainage performance can be maintained.

With the arrangements so far described, the present invention can be used advantageously as an air deflecting cover for a vehicle.

## Claims

1. An air deflecting cover (12) mountable on a suspension device (21) of a vehicle (11) for straightening out air flowing underneath the vehicle, wherein the air deflector cover (12) includes an inside cover section (56) mountable on a suspension member (23) of the suspension device (21) extending in a width direction of the vehicle, the inside cover section (56) having a vertical flow straightening surface (55) extending in a longitudinal direction of the vehicle and facing toward a widthwise central portion of the vehicle,
wherein the air deflecting cover (12) further includes a bottom cover section (61) mountable on a bottom part (57) of the suspension member (23) and having a flow straightening surface (58) facing downward of the vehicle (11), wherein the inside cover section (56) and the bottom cover section (61) are formed integrally with each other,
wherein the bottom cover section (61) is a bottom plate member lying below an end (27, 35) of the suspension member (23), and the inside cover section (56) is an inside plate member, **characterized in that**
the inside plate member extends upright from an inside edge (64) of the bottom plate member (61) directed toward the widthwise central portion of the vehicle (11).

2. The air deflecting cover (12) according to claim 1, wherein the bottom plate member (61) has a drain hole (65) formed therein and located adjacent to the inside edge (64) of the bottom plate member.

3. The air deflecting cover (12) according to claim 2, wherein the bottom cover section (61) has an end disposed below a suspension shock absorbing member (24) disposed vertically behind the suspension member (23), and the drain hole (65) is located forwardly of and adjacent to the suspension shock absorbing member (24).

4. The air deflecting cover (12) according to claim 1 or 2, wherein the bottom plate member (61) has a rib (66) extending upright from an inner surface thereof and located rearward of the drain hole (65).

5. The air deflecting cover (12) according to any one of claims 1 to 4, wherein the bottom cover section (61) is lockingly engaged with a part of a shock absorber attachment portion (33), which is contiguous with the end (27, 35) of the suspension member (23) and extends in a rearward direction of the vehicle (11).

## Patentansprüche

1. An einer Radaufhängungsvorrichtung (21) eines Fahrzeugs (11) montierbare luftablenkende Abdeckung (12) zum Begradigen eines Luftstroms unterhalb des Fahrzeugs, wobei die Luftablenkungs-Abdeckung (12) einen an einem Radaufhängungselement (23) der Radaufhängungsvorrichtung (21) montierbaren inneren Abdeckabschnitt (56) umfasst, welcher sich in eine Breitenrichtung des Fahrzeugs erstreckt, wobei der innere Abdeckabschnitt (56) eine vertikale Strombegradigungsfläche (55) aufweist, welche sich in einer Längsrichtung des Fahrzeugs erstreckt und in Richtung eines Mittelbereichs bezüglich der Breitenrichtung des Fahrzeugs weist,
wobei die luftablenkende Abdeckung (12) ferner einen unteren Abdeckabschnitt (61) umfasst, welcher an einem Unterteil (57) des Radaufhängungselements (23) montierbar ist und eine Strombegradigungsfläche (58) aufweist, welche nach unten von dem Fahrzeug (11) weist, wobei der innere Abdeckabschnitt (56) und der untere Abdeckabschnitt (61) integral miteinander gebildet sind,
wobei der untere Abdeckabschnitt (61) ein Bodenplattenelement ist, welches unterhalb eines Endes (27, 35) des Radaufhängungselements (23) liegt, und der innere Abdeckabschnitt (56) ein inneres Plattenelement ist,
**dadurch gekennzeichnet, dass** das innere Plattenelement sich nach oben von einem inneren Rand (64) des Bodenplattenelements (61) erstreckt, welches in Richtung des Mittelbereichs bezüglich der Breitenrichtung des Fahrzeugs (11) gerichtet ist.

2. Luftablenkende Abdeckung (12) nach Anspruch 1, wobei der untere Abdeckabschnitt (61) ein Abflussloch (65) aufweist, welches darin gebildet und benachbart zu dem inneren Rand (64) des Bodenplattenelements angeordnet ist.

3. Luftablenkende Abdeckung (12) nach Anspruch 2, wobei der untere Abdeckabschnitt (61) ein Ende aufweist, welches unterhalb eines Aufhängungs-Stoßdämpfer-Elements (24) angeordnet ist, welches vertikal hinter dem Radaufhängungselement (23) angeordnet ist, und das Abflussloch (65) vor dem und benachbart an das Aufhängungs-Stoßdämpfer-Element (24) angeordnet ist.

4. Luftablenkende Abdeckung (12) nach Anspruch 1 oder 2, wobei der untere Abdeckabschnitt (61) eine Rippe (66) aufweist, welches sich von einer inneren Fläche davon nach oben erstreckt und hinter dem Abflussloch (65) angeordnet ist.

5. Luftablenkende Abdeckung (12) nach einem der Ansprüche 1 bis 4, wobei der untere Abdeckabschnitt (61) mit einem Teil eines Stoßdämpfer-Befestigungsabschnitts (33) in Verriegelungseingriff steht, welcher dem Ende (27, 35) des Radaufhängungselements (23) angrenzend und sich in eine Heckrichtung des Fahrzeugs (11) erstreckt.

## Revendications

1. Déflecteur d'air (12) pouvant être monté sur un dispositif de suspension (21) d'un véhicule (11) pour dévier l'écoulement d'air en dessous du véhicule, dans lequel le déflecteur d'air (12) comprend une section de déflecteur intérieure (56) pouvant être montée sur un élément de suspension (23) du dispositif de suspension (21) qui s'étend dans le sens de la largeur du véhicule, la section de déflecteur intérieure (56) présentant une surface verticale de déviation d'écoulement (55) qui s'étend dans une direction longitudinale du véhicule et qui est orientée vers une partie centrale dans le sens de la largeur du véhicule,
dans lequel le déflecteur d'air (12) comprend en outre une section de déflecteur inférieure (61) qui peut être montée sur une partie inférieure (57) de l'élément de suspension (23) et qui présente une surface de déviation d'écoulement (58) tournée vers le bas du véhicule (11), dans lequel la section de déflecteur intérieure (56) et la section de déflecteur inférieure (61) sont formées intégralement l'une avec l'autre,
dans lequel la section de déflecteur inférieure (61) est un élément de plaque inférieur qui est situé en dessous d'une extrémité (27, 35) de l'élément de suspension (23), et la section de déflecteur intérieure (56) est un élément de plaque intérieur, **caractérisé en ce que** l'élément de plaque intérieur s'étend verticalement à partir d'un bord intérieur (64) de l'élément de plaque inférieur (61) orienté vers la partie centrale dans le sens de la largeur du véhicule (11).

2. Déflecteur d'air (12) selon la revendication 1, dans lequel l'élément de plaque inférieur (61) comporte un trou de drainage (65) qui est formé dans celui-ci et qui est situé à proximité du bord intérieur (64) de l'élément de plaque inférieur.

3. Déflecteur d'air (12) selon la revendication 2, dans lequel la section de déflecteur inférieure (61) présente une extrémité qui est disposée en dessous d'un élément d'absorption de chocs de suspension (24) qui est disposé verticalement derrière l'élément de suspension (23), et le trou de drainage (65) est situé en avant et à proximité de l'élément d'absorption de chocs de suspension (24).

4. Déflecteur d'air (12) selon la revendication 1 ou 2, dans lequel l'élément de plaque inférieur (61) comporte une nervure (66) qui s'étend verticalement à partir d'une surface intérieure de celui-ci et qui est située en arrière du trou de drainage (65).

5. Déflecteur d'air (12) selon l'une quelconque des revendications 1 à 4, dans lequel la section de déflecteur inférieure (61) est engagée de façon verrouillée avec une partie d'une partie de fixation absorbeuse de chocs (33) qui est contiguë à l'extrémité (27, 35) de l'élément de suspension (23) et qui s'étend dans une direction arrière du véhicule (11).
